# EUROPÄISCHE PATENTSCHRIFT

(11) **EP 0 884 562 B1**
(45) Veröffentlichungstag und Bekanntmachung des Hinweises auf die Patenterteilung: **17.03.2004**
(21) Anmeldenummer: 98110140.5
(22) Anmeldetag: 04.06.1998
(51) Int. Cl.: G01C 21/20

(54) **Unidirektionales Off-Board-Navigationssystem**
Unidirectional off-board navigation system
Système de navigation hors-bord uni-directionel

(30) Priorität: 11.06.1997 DE 19724556
(43) Veröffentlichungstag der Anmeldung: 16.12.1998
(73) Patentinhaber: ADAM OPEL AG, 65423 Rüsselsheim (DE)
(72) Erfinder: Berninger, Harald, Dipl.-Ing., 65428 Rüsselsheim (DE)

(56) Entgegenhaltungen:
- EP-A- 0 317 181
- US-A- 5 184 303
- SPARMANN J M: "LISB ROUTE FUIDANCE AND INFORMATION SYSTEM: FIRST RESULTS OF THE FIELD TRIAL" PROCEEDINGS OF THE VEHICLE NAVIGATION AND INFORMATION SYSTEMS CONFERENCE. (VNIS), TORONTO, SEPT. 11 - 13, 1989, Nr. CONF. 1, 11. September 1989, Seiten 463-466, XP000089912 REEKIE D;CASE E; TSAI J

## Beschreibung

Die Erfindung bezieht sich auf ein Verfahren zum Leiten eines Kraftfahrzeugs zu einem gewünschten Fahrziel mit den im Oberbegriff des Patentanspruches 1 angegebenen Merkmalen sowie auf eine Ziel-Leitvorrichtung für Kraftfahrzeuge nach dem Oberbegriff des Patentanspruches 4. Verfahren und Vorrichtungen dieser Art sind bekannt.

Bei Navigations- oder Routenführungssystemen ist es heute üblich, zwischen On-Board- und Off-Board-Systemen zu unterscheiden. On-Board-Navigationssysteme (Beispiel: EP 0 768 632 A) sind dadurch gekennzeichnet, daß alle benötigten Daten und die entsprechende Ausrüstung im Fahrzeug befindlich sind. Straßenkarten werden mehr oder weniger aktuell in Form von elektronischen Daten im Fahrzeug mitgeführt. Es ist zwar eine Unabhängigkeit gegeben, jedoch ist es notwendig, relativ oft neue Daten einzukaufen, die nie aktuelle Tagessituationen berücksichtigen. Zur Verbesserung dieser Systeme ist es beispielsweise aus der WO 96/35198 oder WO 96/35199 bekannt, daß aktuelle Verkehrsmeldungen, die über Datenrundfunk übermittelt werden, in die Navigation einbezogen werden. Derart ist es jedoch nicht möglich, den Mangel alten Kartenmaterials zu überspielen.

Bei Off-Board-Systemen sind die Navigationsdaten im Speicher einer oder mehrerer Zentralen abgespeichert. Wie beispielsweise in der DE 195 31 824 A beschrieben, kann ein Fahrzeugnutzer Verbindung mit einer Zentrale aufnehmen (über Telefonverbindung), dort sein gewünschtes Fahrziel angeben, und es werden dann Fahrhinweise an das Fahrzeug übermittelt. Es erfolgt eine Ausgabe von Zielrichtungsinformationen, wobei diese auf Basis von aktuellen Fahrzeugpositionsdaten ermittelt werden. Die Verarbeitung erfolgt in der Zentrale, wo die Positionsdaten vorliegen müssen. Von Vorteil hierbei ist, dass die Navigationsdaten im Speicher der zentralen Informationsanbieter ständig aktualisiert werden können und auch eine Einbeziehung des momentanen Verkehrsgeschehens (Stau, Umleitung, Baustellen, ...) möglich ist. Es sind jedoch Gebühren für die Nutzung der Daten als auch für die Telefonverbindung fällig. Des weiteren sind Probleme des Datenschutzes zu berücksichtigen, da Angaben über persönliche Aufenthaltsorte und Fahrziele in unbefugte Hände gelangen können.

Bekannt sind des weiteren Systeme, die eine Kombination aus On-Board-System und Off-Board-System darstellen (Sparmann J.M.: "LISB route guidance and information system" (VNIS, Toronto, Sept. 11-13, 1989, Nr. CONF.1,11; Sept. 1989, Seiten 463-466; oder auch EP-A-0317181). Es werden aktuelle Straßenkartenabschnitte von außen an Kraftfahrzeuge übermittelt, mittels derer dann eine On-Board-Navigation stattfindet. Diese aus Sicht der Datensicherheit positiven Verfahren erfordern die Übermittlung großer Datenmengen und entsprechend große Speicher in den Kraftfahrzeugen.

Es ist Aufgabe der Erfindung, ein Verfahren zum Leiten von Kraftfahrzeugen sowie eine Ziel-Leitvorrichtung zu schaffen, die auf Basis ständig aktueller Navigationsdaten arbeiten, dabei aber nur einen geringen Aufwand und eine geringe Gebührenbelastung verursachen und die unproblematisch in Bezug zu Fragen des Datenschutzes sind.

Zur Lösung dieser Aufgabe zeichnet sich das genannte Verfahren durch alle im Patentanspruch 1 angegebenen Merkmale aus, und eine erfindungsgemäße Ziel-Leitvorrichtung ist durch die Merkmale des Patentanspruchs 4 gekennzeichnet. Einzelheiten der Erfindung ergeben sich aus den Patentansprüchen 2, 3 sowie 5 bis 7.

Wie bekannt, werden:
- aktuelle Fahrzeugpositionsdaten des Kraftfahrzeugs ermittelt (beispielsweise mittels GPS - Global Position System) und im Fahrzeug verfügbar gemacht,
- zu erreichende (Wunsch-)Fahrziele im Kraftfahrzeug an einer Eingabevorrichtung eingegeben und Zielrichtungsinformationen zum Leiten des Kraftfahrzeugs von einer Ausgabevorrichtung (optisch und/oder akustisch) ausgegeben.

Das gewünschte Fahrziel wird jedoch nicht, wie bekannt, an eine Zentrale weitergeleitet. Die zentralen Informationsanbieter, denen Navigationsdaten vorliegen, senden permanent oder kurzperiodisch eine Vielzahl von Zielinformationen aus. Diese sind nicht bezogen auf das spezielle Fahrziel des Kraftfahrzeugs, sondern betreffen alle wichtigen Fahrziele im Sendebereich des Informationsanbieters. Im Fahrzeug erfolgt jetzt eine selbsttätige Auswahl der benötigten Informationen, wenn zum Wunsch-Fahrziel auch Zielinformationen empfangbar sind. Sind Zielinformationen vorhanden, werden diese im Kraftfahrzeug mit den Positionsdaten des Fahrzeugs zu ausgebbaren Zielrichtungsinformationen verarbeitet.

Werden die Zielinformationen über eine Art Datenrundfunk ausgesendet, kann dies ständig aktuell sehr kosten- (gebühren-)günstig erfolgen. Ein Übermitteln von Positionsdaten und Zielwünschen an Außenstehende ist nicht erforderlich. Eine entsprechende Ziel-Leitvorrichtung nach Patentanspruch 4 ist mit relativ geringem technischen Aufwand zu schaffen, wobei Empfänger für Datenrundfunk oft bereits vorhanden sind und nur eine Recheneinheit mit neuen Aufgaben vonnöten ist. Hier kann eine gegebenenfalls bereits vorhandene Recheneinheit mit erweiterbarem Funktionsumfang Anwendung finden.

Einzelheiten der Erfindung ergeben sich aus der folgenden Beschreibung eines Ausführungsbeispiels. Von den zugehörigen Zeichnungen zeigt
- Fig. 1:: einen Funktionsplan zur Verdeutlichung des erfindungsgemäßen Verfahrens;
- Fig. 2:: ein Blockschaltbild einer Ziel-Leitvorrichtung.

Das Verfahren zum Leiten eines Kraftfahrzeugs zu einem gewünschten Fahrziel A, B, C, D ... beginnt mit dem Verfahrensschritt 1 - Eingabe eines Fahrziels A bis D, welches im Beispiel speziell durch den Buchstaben D symbolisiert ist. Fahrziele A bis D können Orte, Parkplätze, Sehenswürdigkeiten oder sonstiges sein. Die Eingabe kann gleichzeitig als Startsignal für die folgenden Verfahrensschritte gewertet werden.

Im Verfahrensschritt 2 erfolgt die Suche nach verfügbaren Zielinformationen, die von Informationsanbietern I ausgesendet und im Kraftfahrzeug empfangbar sein können. Verschiedene Informationsanbieter I senden permanent oder in kurzen Perioden Informationen in Form von Daten zu jeweils verschiedenen Zielen A bis D ... aus, und.diese Informationen sind ständig im Kraftfahrzeug empfangbar, wenn sich das Fahrzeug im Sendebereich der Informationsanbieter befindet.

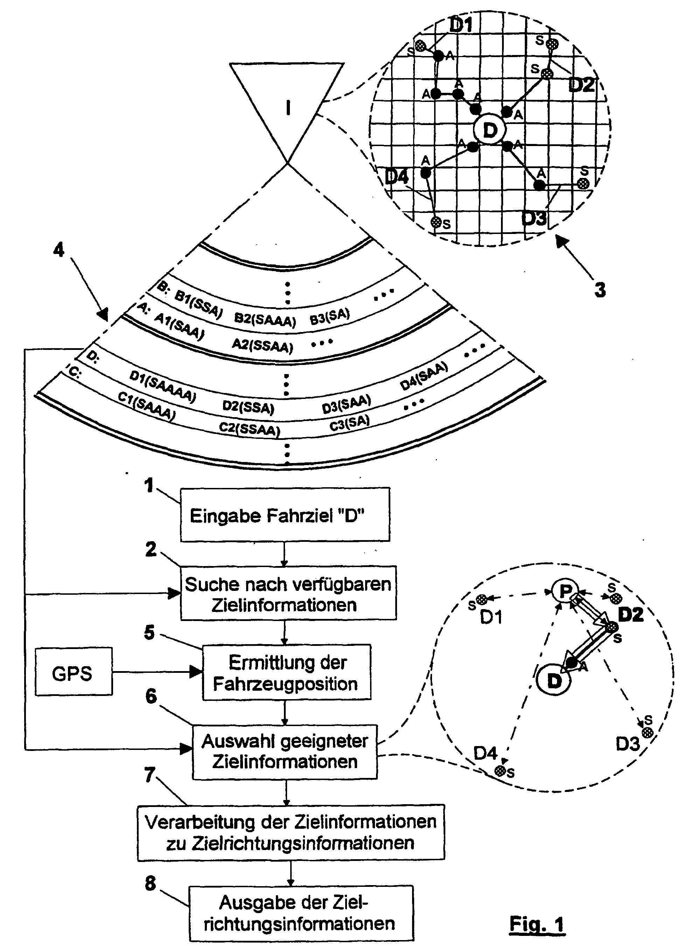

Im folgenden wird vorausgesetzt, daß ein Informationsanbieter I auch Zielinformationen zu dem speziell gewünschten Ziel D aussendet. Die Zielinformationen können einerseits die Position des Ziels D als auch verschiedene Fahrstrecken D1, D2, D3, D4 zum Ziel umfassen. Die Fahrstrecken D1 bis D4 sollen so ausgewählt sein, daß unabhängig von der aktuellen Position P (diese wird dem Informationsanbieter I nicht mitgeteilt) des Fahrzeugs eine vorteilhaft nutzbare Fahrstrecke D1 bis D4 zum Ziel D existiert. Die Fahrstrecken D1 bis D4 ergeben sich jeweils aus der Verbindung von Punktmengen, wobei zu unterscheiden ist zwischen Sammelpunkten S (die aus beliebigen Richtungen gut erreichbar sein sollten) und Anfahrpunkten A (welche nur über die vorgegebene Punktverbindung anfahrbar sind, weil beispielsweise Gewässer- oder Bahnstrecken die Anfahrt behindern). Die Zielinformationen des Informationsanbieters I zum Ziel D sind in Figur 1 im eingekreisten Lageplan 3 verdeutlicht, wobei zu jedem Fahrziel A bis D, zu denen Zielinformationen ausgesendet werden, ein derartiger Lageplan existiert. Es sind die vier aus Sammelpunkten S und Anfahrpunkten A bestehenden Fahrstrecken D1 bis D4 erkennbar, wobei alle Punkte S, A, D mit Koordinatenangaben verfügbar sind. Es können jedoch weitere Fahrstreckeninformationen bei Informationsanbietern I verfügbar sein und von diesen ausgesendet werden. Insbesondere den Sammelpunkten S sollten Werte wie Strekkenlänge zum Ziel D, Fahrzeit zum Ziel D oder andere Hinweise wie "touristisch interessant" verschlüsselt zugeordnet sein, so daß ein Fahrstreckenvergleich für die Empfänger der Zielinformationen möglich ist.

Die Sendedaten des Informationsanbieters I sind in Figur 1 durch den Sendekegel 4 schematisch verdeutlicht, wobei erkennbar ist, daß die Daten permanent und in kurzen Perioden wiederkehrend ausgesendet werden.

Im mit den Bezugszeichen 5 versehenen Verfahrensschritt wird unter Nutzung einer bordeigenen Einrichtung (hier GPS) die aktuelle Fahrzeugposition P ermittelt.

Mit den vorhandenen Informationen ist jetzt im Verfahrensschritt 6 eine Fahrstreckenauswahl zu treffen. Im Fahrzeug kann die Entfernung des Fahrzeugs zu jedem der Sammelpunkte S der Fahrstrecken D1 bis D4 ermittelt werden. Diese wird dann addiert zu der Entfernung (oder auch Fahrzeit) des jeweiligen Sammelpunktes S zum Fahrziel D. Da die Position P im Norden des Lageplans liegt, ist, wie im Hilfslageplan dargestellt, ersichtlich, daß die Fahrstrecken D3 und D4, die vom Süden an das Fahrziel D heranführen, ungeeignet sind. Es kommen die Fahrstrecken D1 und D2 in Betracht, wobei die Fahrstrecke D2 zwei Sammelpunkte S als Alternativen bietet. Unter der Priorität "kürzeste Fahrstrecke" wird im Verfahrensschritt 6 die Entscheidung für die Fahrstrecke D2 unter Nutzung des zweiten Sammelpunktes S getroffen. Bei vorheriger Eingabe anderer Prioritäten könnte die Auswahl auch anders getroffen werden, wenn die Anfahrt zum Fahrziel D beispielsweise über den ersten Sammelpunkt S der Strecke D2 eventuell schneller möglich ist oder wenn die Fahrstrecke D1 eventuell touristisch anspruchsvoll ist.

Ist auf einer der Fahrstrecken mit Behinderungen zu rechnen, können diese Informationen umgehend in die Sendedaten 4 des Informationsanbieters I eingearbeitet werden.

Die Zielinformationen, die zur Auswahl gekommen sind, werden mittels einer entsprechenden Einrichtung im Fahrzeug im Verfahrensschritt 7 zu Zielrichtungsinformationen verarbeitet, wozu die aktuelle Fahrzeugposition P die Basis ist. Als Zielrichtung wird jeweils immer die Richtung von der Position P zum folgenden Sammelpunkt S oder Anfahrpunkt A oder zum Ziel D berechnet. Im Verfahrensschritt 8 erfolgt die Ausgabe der Zielrichtungsinformation optisch oder akustisch.

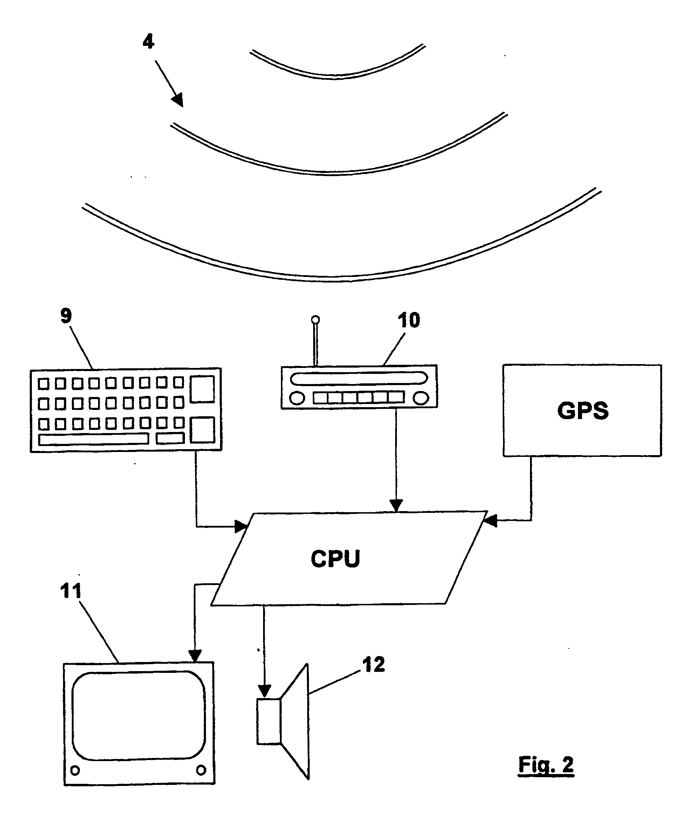

Eine Einrichtung zur Durchführung des beschriebenen Verfahrens ist schematisch in Figur 2 gezeigt. Der Verfahrensschritt 1 "Eingabe" wird über eine Tastatur 9 im Fahrzeug vorgenommen. Ein Empfänger 10 für Datenrundfunk empfängt die Sendedaten 4 des Informationsanbieters I, und diese gegebenenfalls zwischenzuspeichernden Daten werden einer Recheneinheit CPU zugeleitet, die die empfangenen (oder in einem Speicherelement zwischengespeicherten) Daten dahingehend untersucht, ob Zielinformationen zum gewünschten Ziel D gesendet werden.

Gleichzeitig oder zeitversetzt zur Datenanalyse gibt die Recheneinheit CPU einen Befehl zur Positionsermittlung an eine bordeigene Einrichtung GPS zur Ermittlung der Position P aus, und die Positionskoordinaten werden der Recheneinheit CPU zugeleitet.

Die in der Recheneinheit CPU - wie vorab beschrieben-ermittelten Zielrichtungsinformationen werden über einen Bildschirm 11 optisch und/oder über Lautsprecher 12 akustisch ausgegeben.

Die Recheneinheit kann dem Empfänger 10 oder der Einrichtung GPS zur Positionsbestimmung zugeordnet sein, so daß der im Fahrzeug zu treffende Aufwand sehr gering ist. Die Verfahrenskosten sind ebenfalls gering, da es sich um ein unidirektionales Verfahren handelt.

## Patentansprüche

1. Verfahren zum Leiten eines Kraftfahrzeugs zu einem gewünschten Fahrziel (A, B, C, D) wie Parkraum oder Hotel oder Sehenswürdigkeit, bei dem
- aktuelle Fahrzeugpositionsdaten (P) ermittelt werden und im Fahrzeug verfügbar sind,
- ein Fahrziel (D) im Kraftfahrzeug vorgegeben wird,
- eine Vielzahl von Zielinformationen und Fahrstreckeninformationen (D1, D2, D3, D4) zur Erreichung von Fahrzielen (D) von Informationsanbietern (I) permanent oder kurzperiodisch ausgesendet werden und im Kraftfahrzeug empfangbar sind
und
- Zielrichtungsinformationen im Fahrzeug angezeigt werden,
**dadurch gekennzeichnet, dass**
- im Kraftfahrzeug eine selbsttätiger Empfang nur der benötigten Zielinformationen und der zugehörigen Fahrstreckeninformationen (D1, D2, D3, D4) erfolgt, wenn zum Wunsch-Fahrziel (D) auch Zielinformationen empfangbar sind und
- nach Empfang der Zielinformationen und der Fahrstreckeninformationen (D1, D2, D3, D4) eine Verarbeitung dieser Informationen und der Fahrzeugpositionsdaten (P) zu anzeigbaren Zielrichtungsinformationen erfolgt.

2. Verfahren nach Anspruch 1, **dadurch gekennzeichnet, dass** zu den ausgesendeten Zielinformationen mehrere mögliche Fahrstreckeninformationen (D1, D2, D3, D4) ausgesendet und im Kraftfahrzeug empfangen werden und die nächstgelegene Fahrstrecke (D2) unter Nutzung der aktuellen Fahrzeugpositionsdaten (P) ausgewählt wird, um anschließend als Basis für das Leiten zum Fahrziel (D) zu dienen.

3. Verfahren nach Anspruch 2, **dadurch gekennzeichnet, dass** jede Fahrstreckeninformation (D1, D2, D3, D4) aus einer Punktmenge besteht, wobei es sich um zumindest einen Sammelpunkt (S) handelt, der beliebig vom Kraftfahrzeug erreichbar ist und wobei gegebenenfalls ein oder mehrere Anfahrpunkte (A) enthalten sind, die nur aus bestimmten Richtungen vom Kraftfahrzeug erreichbar sind.

4. Ziel-Leitvorrichtung zur Verwendung in Kraftfahrzeugen, mit einer Einrichtung (GPS) zur Bestimmung der aktuellen Fahrzeugposition (P), einer Eingabeeinheit (9) zur Eingabe von zu erreichenden Fahrzielen, einer Ausgabeeinheit (11, 12) zur Ausgabe von Zielrichtungsinformationen sowie mit einer Empfangseinrichtung (10) zum Empfang von Zielinformationen und von Fahrstreckeninformationen(D1, D2, D3, D4), die von zumindest einem außerhalb des Kraftfahrzeugs befindlichen Informationsanbieter (I) ausgesendet werden, **dadurch gekennzeichnet, dass** eine Recheneinheit (CPU) im Kraftfahrzeug mit der Eingabeeinheit (9), der Empfangseinrichtung (10) sowie mit der Einrichtung (GPS) zur Bestimmung der aktuellen Fahrzeugposition verbunden ist und entsprechend eines mittels der Eingabeeinheit (9) eingegebenen Fahrziels (D) eine Auswahl der benötigten Zielinformationen und Fahrstreckeninformationen(D1, D2, D3, D4) aus einer Vielzahl empfangbarer Zielinformationen und Fahrstreckeninformationen(D1, D2, D3, D4) trifft, dass die Recheneinheit (CPU) die Zielinformationen und die Fahrstreckeninformationen(D1, D2, D3, D4) auf Basis der aktuellen Fahrzeugposition (P) in an sich bekannter Weise zu Zielrichtungsinformationen verarbeitet und diese dann an die Ausgabeeinheit (11,12) überträgt, von der sie ausgegeben werden.

5. Ziel-Leitvorrichtung nach Anspruch 4, **dadurch gekennzeichnet, dass** die Empfangseinrichtung (10) ein Datenrundfunkempfänger ist, der im Betrieb permanent oder kurzperiodisch ausgesendete Zielinformationen in Form von Daten empfängt.

6. Ziel-Leitvorrichtung nach Patentanspruch 4 oder 5, **dadurch gekennzeichnet, dass** die Empfangseinrichtung (10) einen elektronischen Speicher zur Zwischenspeicherung von empfangenen Zielinformationen aufweist.

7. Ziel-Leitvorrichtung nach zumindest einem der Ansprüche 4 bis 6, **gekennzeichnet durch** eine Vorrichtung (9) zur Eingabe von die Auswahl der Zielinformationen betreffenden Prioritäten, wie "kürzeste Fahrstrecke zum Ziel" oder "schnellstmögliche Erreichung des Ziels" oder "touristisch eindrucksvolle Fahrstrecke".

## Claims

1. Method for guiding a motor vehicle to a desired destination (A, B, C, D) such as a parking space or hotel or sight, in which
- current vehicle position data (P) are determined and are available in the vehicle,
- a destination (D) is preset in the motor vehicle,
- a plurality of items of destination information and route information (D1, D2, D3, D4) for reaching destinations (D) are emitted by information providers (I) permanently or at short intervals and are receivable in the motor vehicle and
- destination direction information is displayed in the vehicle,
**characterised in that**
- in the motor vehicle, automatic reception only of the required destination information and associated route information (D1, D2, D3, D4) takes place when destination information to the desired destination (D) is also receivable and
- after reception of the destination information and route information (D1, D2, D3, D4), processing of this information and of the vehicle position data (P) into destination direction information which can be displayed takes place.

2. Method according to claim 1, **characterised in that**, for the emitted destination information, several possible items of route information (D1, D2, D3, D4) are emitted and received in the motor vehicle and the closest route (D2) is selected using the current vehicle position data (P), in order then to serve as the basis for guiding to the destination (D).

3. Method according to claim 2, **characterised in that** each item of route information (D1, D2, D3, D4) consists of a number of dots, involving at least one gathering point (S) which can be reached by the motor vehicle as desired, and if occasion arises including one or more starting points (A) which can be reached by the motor vehicle only from certain directions.

4. Destination guide apparatus for use in motor vehicles, with a device (GPS) for determining the current vehicle position (P), an input unit (9) for the input of destinations to be reached, an output unit (11, 12) for the output of destination direction information, and with a reception device (10) for the reception of destination information and route information (D1, D2, D3, D4) which is emitted by at least one information provider (I) located outside the motor vehicle, **characterised in that** a computing unit (CPU) in the motor vehicle is connected to the input unit (9), the reception device (10) and to the device (GPS) for determining the current vehicle position and, according to a destination (D) inputted by means of the input unit (9), makes a choice of the required destination information and route information (D1, D2, D3, D4) out of a plurality of items of receivable destination information and route information (D1, D2, D3, D4), **in that** the computing unit (CPU) processes the destination information and route information (D1, D2, D3, D4) on the basis of the current vehicle position (P) in a manner known in the art into destination direction information and then transmits the latter to the output unit (11, 12) by which it is outputted.

5. Destination guide apparatus according to claim 4, **characterised in that** the reception device (10) is a data radio receiver which receives destination information emitted permanently or at short intervals during operation in the form of data.

6. Destination guide apparatus according to claim 4 or 5, **characterised in that** the reception device (10) comprises an electronic memory for the temporary storage of destination information received.

7. Destination guide apparatus according to one or more of claims 4 to 6, **characterised by** a device (9) for the input of priorities relating to the choice of destination information, such as "shortest route to destination" or "reach destination as fast as possible" or "route impressive to tourists".

## Revendications

1. Procédé de guidage d'un véhicule automobile vers une destination de roulage (A, B, C, D) souhaitée, tel qu'un espace de stationnement ou un hôtel ou un lieu de curiosité, dans lequel
- des données actuelles (P) de position de véhicule sont déterminées et mises à disposition dans le véhicule,
- une destination de roulage (D) est prédéterminée dans le véhicule automobile,
- une pluralité d'informations de destination et d'informations d'itinéraire de roulage (D1, D2, D3, D4), pour atteindre des destinations de roulage (D) sont émises par des fournisseurs d'informations (I) de façon permanente ou avec une périodicité courte; et sont susceptibles d'être captées dans le véhicule automobile, et
- des informations de direction vers la destination sont affichées dans le véhicule,
**caractérisé en ce que**
- dans le véhicule automobile, est effectuée une réception automatiquement uniquement des informations de destination nécessaires et des informations d'itinéraire de roulage (D1, D2, D3, D4) afférentes, si, pour la destination de roulage souhaitée (D), des informations de destination sont également susceptibles d'être captées, et
- après réception des informations de destination et les informations d'itinéraire de roulage (D1,D2, D3, D4), un traitement de ces informations et des données de position de véhicule (P) est effectué pour fournir des informations affichables de direction à suivre pour atteindre la destination.

2. Procédé selon la revendication 1, **caractérisé en ce que**, parmi les informations de destination émises, plusieurs informations d'itinéraire de roulage (D1, D2, D3, D4) possibles sont émises et sont captées dans le véhicule automobile et l'itinéraire de roulage (D2) le plus proche est sélectionné en utilisant les données de position de véhicule (P) actuelles pour ensuite servir de base pour le guidage vers la destination de roulage (D).

3. Procédé selon la revendication 2, **caractérisé en ce que**, chaque information d'itinéraire de roulage (D1, D2, D3, D4) est formée d'une quantité de points, parmi lesquels au moins un point de regroupement (S), pouvant être atteint au chois par le véhicule automobile et le cas échéant, un ou plusieurs points (A) d'approche ou de départ qui ne peuvent être atteints par le véhicule automobile que depuis des directions déterminées.

4. Dispositif de guidage vers une destination, pour utilisation dans des véhicules automobiles, avec un dispositif (GPS) pour la détermination de la position de véhicule (P) actuelle, une unité d'introduction (9), pour introduire des destinations de roulage à atteindre, une unité d'édition (11, 12) pour l'édition d'informations de direction vers la destination, ainsi qu'avec un organe de réception (10) pour capter des informations de destination et des informations d'itinéraire de roulage (D1, D2, D3, D4), qui sont émises par au moins un fournisseur d'information (I), se trouvant à l'extérieur du véhicule automobile, **caractérisé en ce qu'**une unité de calcul (CPU), installée dans le véhicule automobile, est reliée à l'unité d'introduction (9), au dispositif de réception (10), ainsi qu'au dispositif (GPS) pour déterminer la position actuelle du véhicule et **en ce que**, de manière correspondante, à partir d'une destination de roulage (D), introduite au moyen de l'unité d'introduction (9), une sélection des informations de destination et des informations nécessaires est effectuée à partir d'une pluralité d'informations de destination et d'information de roulage (D1, D2, D3, D4) susceptibles d'être captées, et **en ce que** l'unité de calcul (CPU) traite les informations de destination et les informations d'itinéraire de roulage (D1, D2, D3, D4), sur la base de la position de véhicule (P) actuelle, de manière connue en soi, pour produire des informations de direction vers la destination et transmet ensuite celles-ci à une unité d'édition (11, 12) d'où elles sont éditées.

5. Dispositif de guidage vers une destination selon la revendication 4, **caractérisé en ce que** l'organe de réception (10) est un récepteur radio de transmission de données, qui, en fonctionnement, capte des informations de destination, se présentant sous la forme de données émises, de façon permanente ou suivant une périodicité courte.

6. Dispositif de guidage vers une destination selon la revendication 4 ou 5, **caractérisé en ce que** l'organe de réception (10) comporte un mémoire électronique pour le stockage intermédiaire d'informations de destination ayant été captées.

7. Dispositif de guidage vers une destination selon au moins l'une des revendications 4 à 6, **caractérisé par** un organe (9) pour introduire des priorités concernant la sélection des informations de destination, tel que " l'itinéraire de roulage (D1, D2, D3, D4) le plus court vers la destination" ou "l'itinéraire permettant d'atteindre le plus rapidement possible la destination" ou bien "l'itinéraire de roulage intéressant sur le plan touristique".
